# EUROPEAN PATENT SPECIFICATION

(11) **EP 0 552 635 B1**
(45) Date of publication and mention of the grant of the patent: **12.08.1998**
(21) Application number: 93100293.5
(22) Date of filing: 11.01.1993
(51) Int. Cl.: C04B 35/50

(54) **Composite ceramics sintered body and method of manufacturing the same**
Gesinterter keramischer Verbundkörper und Verfahren zu seiner Herstellung
Corps fritté en céramique composite et son procédé de préparation

(30) Priority: 21.01.1992 JP 8471/92
(43) Date of publication of application: 28.07.1993
(73) Proprietor: SUMITOMO ELECTRIC INDUSTRIES, LIMITED, Osaka 541 (JP); Niihara, Koichi, Hirakata-shi, Osaka (JP)
(72) Inventor: Yoshimura, Masashi, c/o Itami Works of Sumitomo, Itami-shi, Hyogo (JP); Niihara, Koichi, Hirakata-shi, Osaka (JP)
(74) Representative: Herrmann-Trentepohl, Werner, Dipl.-Ing.

(56) References cited:
- GB-A- 2 233 322
- US-A- 3 798 040
- DATABASE WPI Week 7627, Derwent Publications Ltd., London, GB; AN 76-50759X

## Description

### BACKGROUND OF THE INVENTION

### Field of the Invention

The present invention relates to a composite ceramics sintered body and a method of manufacturing the same, and more particularly, it relates to a composite ceramics sintered body containing yttrium oxide (Y₂O₃) having heat resistance and high strength to be employed as structural ceramics, and a method of manufacturing the same.

### Description of the Background Art

Yttrium oxide, which is a compound having a high melting point, has excellent stability under a high temperature. Such yttrium oxide is expected as a high temperature structural material, or translucent ceramics.

However, yttrium oxide has not yet been put into practice as a structural material, due to inferior mechanical properties as compared with currently available oxide ceramics such as aluminum oxide (Aℓ₂O₃) or zirconium oxide (ZrO₂). To this end, an attempt has been made to add an additive to a sintered body which is mainly composed of yttrium oxide for improving its strength. According to study made by the inventors, for example, it has been recognized possible to improve strength of a sintered body having a matrix of yttrium oxide by dispersing silicon carbide (SiC) therein. The result of this experiment was reported by the inventors in Fourth Autumn Symposium, Ceramics Society of Japan, 1991. When silicon carbide is simply dispersed in a sintered body having a matrix of yttrium oxide, however, fracture strength of the as-obtained sintered body is merely at the level of 300 MPa at the most. Thus, the sintered body which is mainly composed of yttrium oxide is still insufficient in strength as practical structural ceramics.

Further JP-A-51056815 discloses a method of manufacturing a SiC-Y₂O₃ compact sintered body by hot pressing a mixed powder including SiC and Y₂O₃ in an air atmosphere of 1850 - 1900°C. From GB-A-2233322 it is known a refractory oxide ceramics of silicon nitride and silicon carbide which can be mechanically strengthened by incorporating up to 50 mole percent of a strengthening material selected from zirconia, silicon carbide, alumina, magnesia, tantalum carbide, zirconium carbide aluminum nitride or silicon nitride.

However, the sintered compact of the two above references was shown to lack the desired mechanical strength for highest performance, especially when exposed to elevated temperatures.

### SUMMARY OF THE INVENTION

An object of the present invention is to improve mechanical strength of a ceramics sintered body containing yttrium oxide.

This object is solved according the features of claim 1 and 3.

The composite ceramics sintered body according to the present invention is a composite sintered body containing at least yttrium oxide (Y₂O₃) and silicon carbide (SiC). In particular, the inventive ceramics sintered body has a structure obtained by dispersing silicon carbide in yttrium oxide particles. The sintered body according to the present invention is heat treated in the atmospheric air or an atmosphere containing oxygen gas, to be improved in fracture strength. While the mechanism of such improvement in fracture strength attained by the heat treatment has not yet been sufficiently clarified, the silicon carbide contained in the sintered body may be oxidized and volume-expanded to cause compressive stress on the surface of the sintered body, or a composite oxide containing yttrium and silicon, such as Y₂SiO₅, for example, is deposited on the surface of the sintered body to cause residual stress. It is conceivable that the fracture stress of the sintered body is improved by the heat treatment in the atmosphere containing oxygen due to an action brought by the combination of the yttrium oxide diffusing oxygen and the oxidized silicon carbide.

Further, the inventive ceramics sintered body has such high strength at elevated temperatures that fracture strength in the atmospheric air is increased by about at least 20 % at a temperature of 1000°C as compared with the room temperature. In this case, the fracture strength may be improved during a fracture test under a high temperature by an action equivalent to that of the heat treatment in the atmospheric air.

According to the present invention, an effect similar to the above can be expected also when the composite ceramics sintered body contains ceramics other than yttrium oxide and silicon carbide or other compound ceramics in which yttrium oxide and silicon carbide are dispersed, so far as the sintered body contains at least yttrium oxide and silicon carbide. In other words, an effect similar to the above can be expected also in a ceramics sintered body containing a composite composition of yttrium oxide and silicon carbide.

According to the present invention, as hereinabove described, it is possible to provide a composite ceramics sintered body having higher strength than a conventional ceramics sintered body containing yttrium oxide and silicon carbide, which can be put into practice as a structural material.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a graph showing relations between silicon carbide contents and fracture strength levels of composite ceramics sintered bodies according to the present invention; and
Fig. 2 is a graph showing relations between fracture test temperatures and fracture strength levels of composite ceramics sintered bodies according to the present invention.

### DESCRIPTION OF THE PREFERRED EMBODIMENTS

### Example 1

Yttrium oxide powder of not more than 0.4 µm in mean particle diameter and silicon carbide powder of 0.3 µm in mean particle diameter were wet-blended at a prescribed ratio in butanol for 50 hours with a ball mill. Then the mixed powder was dried and subjected to hot press sintering in an argon jet of 1550 to 1700°C in temperature for one hour. The as-obtained sintered body of about 40 by 40 by 5 mm was cut to prepare fracture test pieces of 3 by 4 by 35 mm by grinding.

The as-obtained test pieces were subjected to fracture tests at the room temperature. The fracture tests were made in the worked states of the test pieces and after the pieces were heat treated in the atmospheric air of 900°C in temperature for 30 minutes.

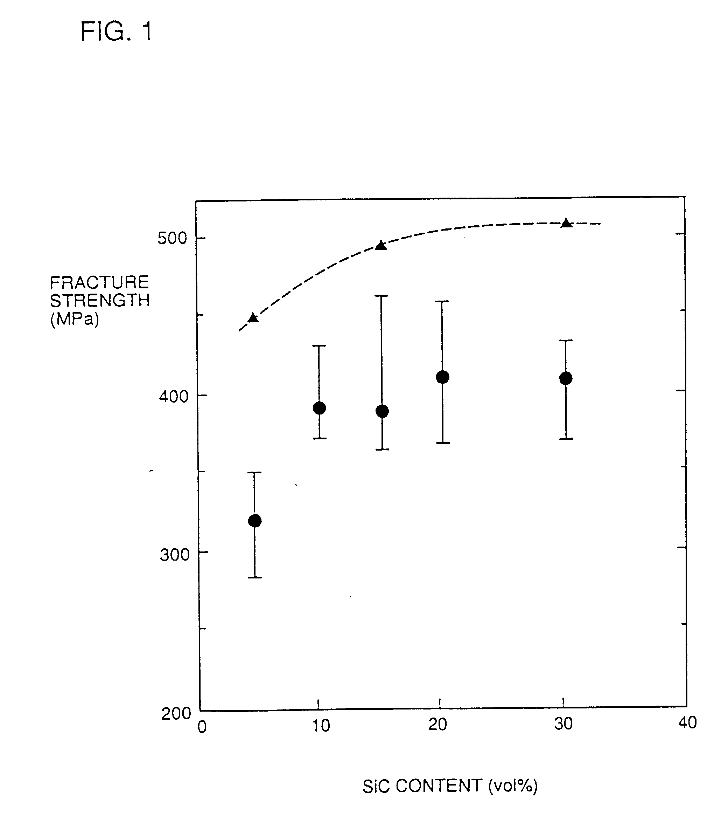

The results of measurement in the fracture tests are shown in Fig. 1, which is a graph showing relations between contents (vol. %) of silicon carbide (SiC) in the respective test pieces and fracture strength levels. Referring to Fig. 1, black circles show fracture strength levels of the test pieces measured in the worked states. On the other hand, black triangles show fracture strength levels measured after the test pieces were heat treated in the atmosphere of 900°C in temperature for 30 minutes. It is understood from Fig. 1 that the fracture strength is improved by about 30 % by the heat treatment.

### Example 2

Sintered bodies obtained according to Example 1 were worked to prepare fracture test pieces. The as-obtained test pieces were subjected to measurement of fracture strength in the atmospheric air at the room temperature and at temperatures of 1000°C, 1200°C, 1400°C and 1600°C respectively.

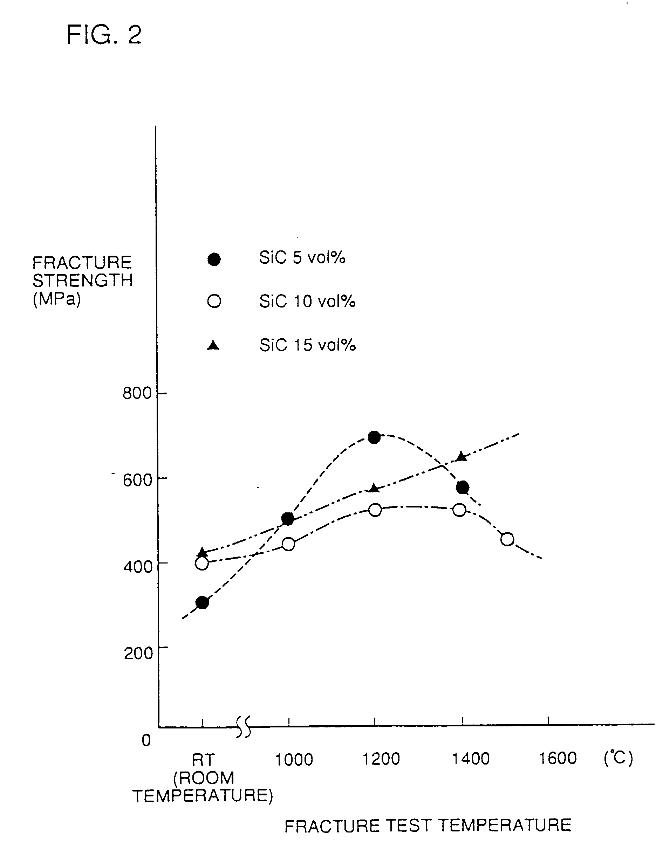

The results of measurement are shown in Fig. 2, which is a graph showing relations between the fracture test temperatures and the fracture strength levels. It is understood from Fig. 2 that the fracture strength measured in the atmosphere at a high temperature is higher by at least about 20 % than that measured at the room temperature.

### Example 3

Among sintered bodies obtained according to Example 1, that having a content of silicon oxide (SiC) of 10 volume percent was employed to prepare fracture test pieces. The as-obtained test pieces were subjected to heat treatment of holding the pieces in the atmospheric air at temperatures of 700°C, 800°C, 900°C, 1000°C, 1100°C, 1200°C and 1300°C respectively for 30 minutes.

When fracture strength levels of the test pieces were measured, those of the test pieces heat treated at the temperatures of 900°C, 1000°C and 1100°C were improved from 400 MPa (under the room temperature) to exceed 500 MPa. However, fracture strength levels of the test pieces heat treated at the temperatures of 700°C, 800°C, 1200°C and 1300°C were reduced below those at the room temperature on the contrary.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A composite ceramics sintered body containing yttrium oxide and silicon carbide, comprising a composite oxide containing yttrium and silicon being formed on the surface of said sintered body, **characterized in that**
the thus-formed sintered body has a fracture strength of more than 400 Mpa and a silicon carbide content of 5 - 30 vol.%.

2. A composite ceramics sintered body in accordance with claim 1, wherein said composite oxide includes Y₂SiO₅.

3. A method of manufacturing a composite ceramics sintered body, comprising;
a step of preparing mixed powder containing yttrium oxide powder and silicon carbide powder;
a step of compression-molding said mixed powder in an inert gas atmosphere of at least 1550°C in temperature thereby obtaining a sintered body; and
a step of heat treating said sintered body in an atmosphere containing oxygen gas or an atmospheric air gas **characterized in that** the oxygen gas or the atmospheric air gas is at least 900°C and less than 1200°C in temperatur,
wherein said composite ceramics sintered body containing at least 5 volume percent and not more than 30 volume percent of said silicon carbide.

## Patentansprüche

1. Gesinterter keramischer Verbundkörper, welcher Yttriumoxid und Siliziumkarbid enthält, umfassend eine Oxidverbindung, welche Yttrium und Silizium enthält und auf der Oberfläche des gesinterten Körpers gebildet wird, **dadurch gekennzeichnet, daß** der in dieser Weise gebildete Körper eine Bruchfestigkeit von mehr als 400 Mpa und einen Anteil von 5 bis 30 Vol.-% Siliziumkarbid aufweist.

2. Gesinterter keramischer Verbundkörper nach Anspruch 1, **dadurch gekennzeichnet, daß** die Oxidverbindung Y₂SiO₅ enthält.

3. Verfahren zur Herstellung eines gesinterten keramischen Verbundkörpers, welches umfaßt: einen Schritt zur Bereitung eines Pulvergemisches, welches Yttriumoxidpulver und Siliziumkarbidpulver enthält; einen Schritt zur Druckformung des Pulvergemisches unter inerter Gasatmosphäre bei einer Temperatur von mindestens 1550 °C, wodurch ein gesinterter Körper entsteht; und einen Schritt der Wärmebehandlung des gesinterten Körpers in einer Atmosphäre, welche Sauerstoff oder ein atmosphärisches Luftgas enthält, **dadurch gekennzeichnet, daß** der Sauerstoff oder das atmosphärische Luftgas eine Temperatur zwischen mindestens 900 °C und weniger als 1200 °C aufweisen, und der gesinterte keramische Verbundkörper zwischen mindestens 5 Vol.-% und nicht mehr als 30 Vol-% Siliziumkarbid enthält.

## Revendications

1. Corps fritté en céramique composite contenant de l'oxyde d'yttrium et du carbure de silicium, comprenant un oxyde composite contenant de l'yttrium et du silicium, formé sur la surface dudit corps fritté, caractérisé en ce que le corps fritté ainsi formé a une résistance à la rupture de plus de 400 MPa et une teneur en carbure de silicium de 5 à 30 % en volume.

2. Corps fritté en céramique composite selon la revendication 1, dans lequel ledit oxyde composite inclut Y₂SiO₅.

3. Procédé de fabrication d'un corps fritté en céramique composite, comprenant ;
une étape de préparation d'une poudre mélangée contenant de la poudre d'oxyde d'yttrium et de la poudre de carbure de silicium ;
une étape de moulage par compression de ladite poudre mélangée dans une atmosphère de gaz inerte d'au moins 1550°C en température permettant d'obtenir un corps fritté ; et
une étape de traitement à la chaleur dudit corps fritté dans une atmosphère contenant de l'oxygène gazeux ou un air atmosphérique gazeux, caractérisé en ce que l'oxygène gazeux ou l'air atmosphérique gazeux est à au moins 900°C et à moins de 1200°C en température,
dans lequel ledit corps fritté en céramique composite contient au moins 5 pour-cent en volume et pas plus de 30 pour-cent en volume dudit carbure de silicium.
